# FASCICULE DE BREVET EUROPEEN

(11) **EP 0 390 245 B1**
(45) Date de publication et mention de la délivrance du brevet: **01.06.1994**
(21) Numéro de dépôt: 90200595.8
(22) Date de dépôt: 14.03.1990
(51) Int. Cl.: A01K 5/01

(54) **Auge pour lapins ou analogues**
Futtertrog für Kaninchen oder dergleichen
Feedtrough for rabbits or the like

(30) Priorité: 31.03.1989 BE 8900361
(43) Date de publication de la demande: 03.10.1990
(73) Titulaire: Dervaux, Guido, B-8660 Geluwe (Wervik) (BE)
(72) Inventeur: Dervaux, Guido, B-8660 Geluwe (Wervik) (BE)
(74) Mandataire: Pieraerts, Jacques

(56) Documents cités:
- DE-A- 3 106 509
- US-A- 1 482 691
- US-A- 1 749 808
- US-A- 1 837 668
- US-A- 2 709 988
- US-A- 3 077 863
- US-A- 3 602 195

## Description

La présente demande de brevet se rapport à un auge pour lapins à garder ou non en cages, parmi lesquels, si nécessaire, des animaux adultes et jeunes, comportant principalement un réceptacle pour la nourriture pour animaux avec une ou plusieurs ouvertures au travers de laquelle la nourriture peut être atteinte et derrière chaque ouverture, un élément mobile parallèle à cette ouverture qui peut être repoussé par les animaux et cela d'autant plus loin que la force exercée par un animal sur cet élément mobile est plus grande.

Des auges ou mangeoires correspondant à cette définition on déjà été décrites dans les brevets US 1,837,668 et 1,482,691. Dans chacun de ces documents, qui visent l'alimentation de porcs ou de porcelets, un écran que les porcs peuvent repousser est monté à basculement et constitue, soit un moyen permettant aux animaux d'agiter la nourriture sèche qui tend à s'agglomérer sous un effet de silo (US 1,837,668), soit un moyen empêchant les porcs de remuer la nourriture avec leur groin, ce qui provoque toujours une perte de nourriture (US 1,482,691). Lorsqu'on envisage l'élevage de lapins, ces mangeoires ne peuvent dans leur principe pas donner satisfaction. Il est en effet envisagé d'élever des animaux de taille différente et en tous cas des animaux présentant une croissance rapide. Il est donc important que, malgré la présence d'une cloison ou élément mobile de jeunes lapins ne puissent pas s'introduire dans l'auge et d'empêcher ceci à tout age de l'animal.

Pour réaliser cet objectif selon l'invention chaque ouverture présente des dimensions telles qu'elle offre au maximum passage à la tête d'un lapin adulte ou sensiblement adulte et que des cloisons s'étendent à angle droit par rapport au dit élément mobile définissant ainsi une espace à hauteur de chaque ouverture.

Dans une forme de réalisation particulièrement avantageuse des moyens sont prévus pour disposer chaque élément mobile à une distance réglable par rapport à l'ouverture derrière laquelle elle se trouve.

D'autres détails et avantages de l'invention ressortiront de la description qui sera donnée ci-après d'une auge pour lapins selon l'invention. Cette description n'est donnée qu'à titre d'exemple et ne limite pas l'invention. Les notations de référence se rapportent aux figures ci-jointes.

La figure 1 est une vue en perspective d'une partie d'une auge suivant l'invention suivant une forme de réalisation possible.

La figure 2 est une représentation schématique et suivant une vue latérale d'une auge présentant un lapin encore très jeune.

La figure 3 est une représentation schématique et suivant une vue latérale d'une auge présentant un lapin jeune.

La figure 4 est une représentation schématique et en vue latérale d'une auge présentant un lapin adulte.

Les figures 5, 6 et 7 illustrent schématiquement les positions possibles de l'élément mobile par rapport à l'auge.

L'auge mise en évidence par ces dessins, peut en principe être constituée d'un seul espace ne présentant qu'une ouverture derrière laquelle un élément mobile, est agencé.

Dû au fait que dans la pratique l'auge suivant l'invention a été conçue afin de résoudre les problèmes qui apparaissent régulièrement lors de l'utilisation de grandes batteries comprenant de nombreux animaux de tailles différentes, parmi lesquels surtout des animaux plus jeunes, la description ci-après, laquelle est d'ailleurs donnée uniquement à titre d'exemple, est principalement orientée sur des auges constituées d'un réceptacle allongé 1 dans laquelle la nourriture 2 apparaît. Cette nourriture peut avoir été simplement déposée dans les réceptacles mais elle peut également être déplacée dans ces réceptacles en faisant appel à des moyens connus, par exemple par de petites bandes transporteuses et analogues.

Au-dessus du réceptacle 1, un élément est agencé sous la forme d'un couvercle 3 dans les parois latérales 5 duquel des ouvertures 4 sont prévues.

Les ouvertures 4 présentent des dimensions qui doivent évidemment pouvoir donner accès à des animaux adultes. Ces ouvertures sont très grandes étant donné que pour certaines races de lapins, la taille la plus grande de la tête d'un lapin peut comporter plus de 8 cm. Des animaux plus jeunes arrivent facilement dans l'auge par de telles ouvertures. Pour être complet et afin d'éclaircir la description ci-après de l'invention, l'espace interne de l'auge est indiqué par la référence 6.

Afin d'empêcher à présent l'accès de l'espace 6 aux jeunes animaux, il est agencé suivant l'invention, derrière les ouvertures 4, un élément 7 qui, suivant une forme de réalisation appliquée de préférence, est constitué d'une matière élastique présentant des caractéristiques telles que des animaux plus jeunes ne peuvent pratiquement pas repousser cet élément vers l'arrière. Du fait que cet élément présente une force élastique bien calculée, celui-ci ne peut se redresser que sous l'influence de la force que peuvent exercer ces plus grands animaux.

De très petits animaux ne peuvent absolument pas repousser cet élément mobile et ils ont donc bien accès à la partie de la nourriture qui peut être atteinte directement derrière l'ouverture 4, mais pas plus loin, de sorte qu'ils ne peuvent pas arriver dans l'auge.

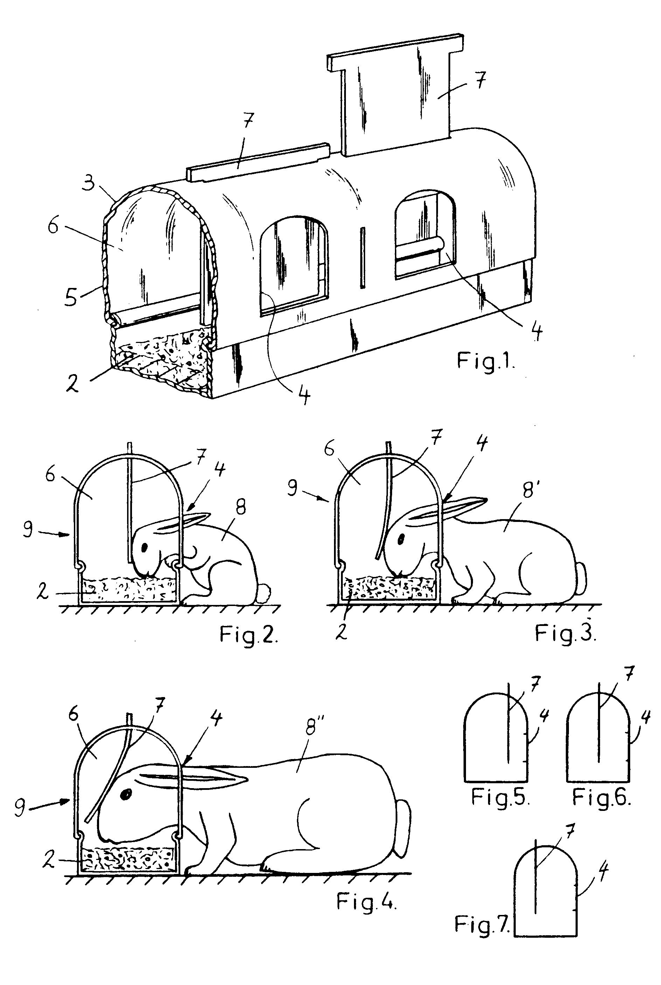

Sur les figures 2 et 3, la situation esquissée ci-dessus est illustrée de manière très schématique.

Sur la figure 2, un animal très jeune est indiqué par la référence 8. Sur les trois figures, l'auge est mise en évidence par la référence générale 9.

L'animal très jeune 8 a accès, par l'ouverture 4 dans la paroi latérale 5 de l'auge 9, à la partie de la nourriture qui est présente directement derrière l'ouverture 4, mais il ne peut pas repousser l'élément mobile 7.

Sur la figure 3 qui suit, on n'a pas encore affaire à un animal adulte 8′. L'animal qui peut encore être considéré comme un animal jeune a suffisamment de force pour pousser l'élément mobile 7 légèrement en arrière, mais pas suffisamment pour arriver, par l'ouverture 4 dans la paroi latérale 5 de l'auge 9, dans l'espace 6 de celle-ci.

Enfin, sur la dernière figure (figure 4), l'animal 8'' est pratiquement un animal adulte dont la taille, surtout celle de la tête, ne permet pas à l'animal d'arriver dans l'auge, mais bien de repousser loin vers l'arrière l'élément mobile 7 de sorte que l'animal peut arriver facilement à sa nourriture.

Il est également prévu suivant l'invention que l'élément mobile 7 puisse se trouver à une distance réglable par rapport à l'ouverture 4 dans la paroi latérale 5 de l'auge 9. La possibilité de réglage de l'élément mobile 7 par rapport à l'ouverture 4 est mise en évidence par la succession des figures.

Sur la première figure (figure 5), l'élément mobile 7 est placé le plus près de l'ouverture 4. Sur la figure qui suit (figure 6), l'élément mobile 7 apparaît au milieu de l'auge, et sur la dernière figure (figure 7) l'élément mobile 7 est agencé le plus loin de l'ouverture 4.

Les ouvertures 4 d'une paroi latérale peuvent se trouver juste devant les ouvertures 4 de l'autre paroi latérale, par quoi il faut entendre qu'elles présentent un même axe central. Les ouvertures peuvent également apparaître en décalage, par quoi il faut entendre que derrière une ouverture 4 d'une paroi latérale il n'est pas prévu d'ouverture dans la deuxième paroi latérale.

La suspension de l'élément mobile 7 par rapport au couvercle 3 de l'auge peut se faire suivant des techniques très différentes. On peut également faire appel ici exclusivement à la force élastique de l'élément mobile, mais cet élément également, qui pourrait être constitué d'une matière non élastique, peut être sous l'influence de ressorts, bien que cet agencement requière une structure plus complexe de l'auge.

Il est donc bien clair que la forme de réalisation donnée à titre d'exemple ne limite en aucun cas l'invention.

Des petites cloisons sont agencées le long des deux côtés des ouvertures 4 entre deux ouvertures 4 et la paroi latérale 5 d'une auge 9.

Ainsi qu'il apparaît de la description donnée ci-dessus, il est donc fondamental que les éléments mobiles 7, quelle que puisse être leur structure, donnent accès à la nourriture 2 en fonction de la force que peut exercer un animal sur cet élément. Cela présente donc le très grand avantage que des animaux grands ou adultes n'ont pas accès à l'auge à cause des dimensions de leur corps et que des animaux plus petits, qui étant donne leur taille limitée auraient bien accès à l'auge, ne peuvent pas parvenir dans l'espace de l'auge derrière les ouvertures 4, parce qu'ils ne présentent pas la capacité ou la force de déplacer un élément mobile 7.

L'invention n'est, comme déjà souligné précédemment, pas limitée à la forme de réalisation décrite ci-dessus et de nombreuses modifications pourraient y être apportées sans sortir du cadre de la présente demande de brevet.

## Revendications

1. Auge pour lapins (8,8',8'') à garder ou non en cages, parmi lesquels, si nécessaire, des animaux adultes (8'') et jeunes (8), comportant principalement un réceptacle (1) pour la nourriture pour animaux avec une ou plusieurs ouvertures (4) au travers de laquelle la nourriture peut être atteinte et, derrière chaque ouverture, un élément mobile (7) parallèle à cette ouverture qui peut être repoussé par les animaux et cela d'autant plus loin que la force exercée par un animal sur cet élément mobile (7) est plus grande, caractérisée en ce que chaque ouverture (4) présente des dimensions telles qu'elle offre au maximum passage à la tête d'un lapin adulte (8'') ou sensiblement adulte et que des cloisons s'étendent à angle droit par rapport au dit élément mobile (7) définissant ainsi un espace, à hauteur de chaque ouverture (4).

2. Auge selon la revendication 1, caractérisé en ce que des moyens sont prévus pour disposer chaque élément mobile (7) à une distance réglable par rapport à l'ouverture (4) derrière laquelle elle se trouve.

## Claims

1. A trough for rabbits (8, 8', 8'') to be kept or not to be kept in cages, including, if necessary, adult animals (8'') and young animals (8), essentially comprising a receptacle (1) for feeding animals with one or more openings (4) through which the food can be reached and, behind each opening, a movable member (7) which is parallel to this opening and which can be pushed back by the animals to a greater extent as the force exerted by an animal on this movable member (7) increases, characterised in that each opening (4) is of such dimensions that it allows to pass, at most, the head of an adult (8'') or substantially adult rabbit, and in that partitions extend at right angles to said movable member (7), thus defining a space at the level of each opening (4).

2. A trough according to claim 1, characterised in that means are provided for arranging each movable member (7) at a distance which is adjustable in relation to the opening (4) behind which it is situated.

## Patentansprüche

1. Futtertrog für Kaninchen (8, 8', 8''), in Käfigen gehalten oder nicht, darunter, falls nötig, ausgewachsene (8'') und junge (8) Tiere, der hauptsächlich einen Behälter (1) für Tiernahrung umfaßt, mit einer oder mehreren Öffnungen (4), durch die die Nahrung erreicht werden kann, und hinter jeder Öffnung ein bewegliches Element (7), parallel zu dieser Öffnung, das zurückgedrückt werden kann durch die Tiere, und dies um so weiter, je größer die Kraft ist, die durch ein Tier auf dieses bewegliche Element (7) ausgeübt wird,
**dadurch gekennzeichnet**,
daß jede Öffnung (4) solche Abmessungen aufweist, daß sie maximal Durchlaß bietet für den Kopf eines ausgewachsenen oder im wesentlichen ausgewachsenen Kaninchens (8''), und daß Trennwände sich erstrecken, rechtwinklig bezüglich des genannten beweglichen Elements (7), die folglich einen Raum, auf Höhe jeder Öffnung (4), abgrenzen.

2. Futtertrog nach Anspruch 1, dadurch gekennzeichnet, daß Einrichtungen vorgesehen sind, um jedes bewegliche Element (7) mit einem Abstand anzuordnen, der verstellbar ist bezüglich der Öffnung (4), hinter der es sich befindet.
